# FASCICULE DE BREVET EUROPEEN

(11) **EP 1 196 708 B1**
(45) Date de publication et mention de la délivrance du brevet: **05.01.2005**
(21) Numéro de dépôt: 00951581.8
(22) Date de dépôt: 13.06.2000
(51) Int. Cl.: F16L 7/02

(54) **DISPOSITIF LIMITEUR DE PROPAGATION D'UNE DEFORMATION DANS UN TUBE A DOUBLE PAROI ENROULE**
VORRICHTUNG ZUR BEGRENZUNG DER AUSBREITUNG EINER DEFORMATION IN EINEM DOPPELWANDIGEM, GEWICKELTEM ROHRSTRANG
DEVICE FOR LIMITING PROPAGATION OF DEFORMATION IN A WOUND DOUBLE-WALLED TUBE

(30) Priorité: 02.07.1999 FR 9908539; 02.12.1999 FR 9915216
(43) Date de publication de la demande: 17.04.2002
(73) Titulaire: TECHNIP FRANCE, 92400 Courbevoie (FR)
(72) Inventeur: Bastard, Antoine, F-27230 Thiberville (FR); Tough, Gordon, Westhill, Aberdeen (GB)
(74) Mandataire: Bertrand, Didier
(86) Numéro de dépôt international: PCT/FR2000/001634
(87) Numéro de publication internationale: WO 2001/002764

(56) Documents cités:
- BE-A- 901 034
- DE-A- 3 208 452
- DE-A- 19 604 147
- FR-A- 2 015 293
- US-A- 4 176 691

## Description

La présente invention concerne un dispositif pour limiter ou arrêter la propagation d'une déformation dans un tube à double paroi enroulable sur une bobine et plus particulièrement dans un tube rigide utilisé pour le transport de fluides tels que des hydrocarbures.

La pose d'un tube ou conduite rigide sur un fond marin est effectuée le plus souvent à partir d'un navire dit de pose. La pose est dite en S lorsque le tube affecte la forme d'un S entre le navire de pose et le fond marin et elle est dite en J lorsque le tube affecte la forme d'un J. Dans ce dernier cas, une rampe de guidage est prévue sur le navire de pose, laquelle rampe peut être parfois immergée partiellement dans l'eau.

Le tube rigide à poser est stocké sur le navire de pose soit en tronçons de tube de longueur donnée mais relativement courte, les tronçons de tube étant reliés ensemble au fur et à mesure de la pose, soit enroulé en grande longueur sur une bobine, le tube étant alors déroulé de ladite bobine pendant l'opération de pose. Ces opérations de pose sont décrites dans le document API (American Petroleum Institute) Recommended Practice 17 A de 1987.

Lorsque le tube a quitté le navire et lors de la pose dudit tube, il est important que ce dernier ne subisse pas de déformation plastique en flexion qui entraînerait une ovalisation du tube, laquelle ovalisation provoquant un "point singulier faible" qui favoriserait l'initiation d'un écrasement ("collapse" en anglais). Par ailleurs, lorsque le tube est posé sur un fond marin à des profondeurs importantes d'eau (typiquement supérieures à 300 m et pouvant atteindre 2000 m et davantage), la pression hydrostatique s'exerçant sur le tube peut être suffisante pour initier une déformation qui a tendance à se propager le long du tube, dans les deux directions. Bien entendu, la formation de la déformation se fera, en priorité sur un "point singulier faible" lorsqu'il existe sur le tube. Lorsque la déformation se produit, il est alors nécessaire de remplacer au moins la section ou partie du tube comportant la zone déformée ou écrasée.

Pour éviter la propagation de la ou des déformations locales, il a été proposé de doter le tube de certains dispositifs ou organes, dénommés des limiteurs de déformation ("buckle arrestor" en anglais).

De tels limiteurs de déformation sont décrits dans les brevets US n° 2 425 800, 3 747 356, 3 768 269 et 4 364 692.

Dans US 3 747 356, le procédé consiste à relier un cylindre à un câble, de loger le cylindre à l'intérieur d'une section de tube puis de dérouler en même temps le tube et le câble, de manière à maintenir le cylindre dans la section de tube pendant la pose de cette dernière jusqu'au contact du tube avec le fond marin. Puis on remonte le cylindre pour le loger dans une autre section de tube à poser et qui est reliée à la précédente. De ce fait, toute déformation susceptible de se produire, pendant la pose du tube, entre le navire de pose et le fond marin est immédiatement arrêtée et n'est donc pas autorisée à se propager le long des sections du tube. Toutefois, une telle proposition ne présente aucune solution ou efficacité pour arrêter les déformations susceptibles de se propager après la pose définitive du tube sur le fond marin.

Dans US 3 768 269, il est proposé d'augmenter localement la rigidité du tube en disposant, à intervalles réguliers par exemple à des intervalles compris entre 100 m et 500 m, des bagues de renfort dont la longueur est comprise entre 1m et 2,5 m. Une telle solution n'est valable que pour des tubes posés par sections car les bagues de renfort peuvent être montées et fixées en usine sur les sections de tube, puis transportées par le navire de pose jusqu'au lieu de pose. Lorsque le tube est de grande longueur et enroulé sur une bobine de stockage, il devient alors pratiquement impossible d'enrouler le tube avec ses bagues de renfort sur une bobine car elles induiraient des parties rectilignes ou sensiblement rectilignes et non déformables dans l'enroulement du tube sur la bobine de stockage. Pour pallier cette difficulté, il est possible d'envisager de monter et fixer les bagues de renfort pendant les opérations de pose. Mais alors cela nécessiterait d'interrompre la pose, à intervalles réguliers, afin de monter et fixer les bagues de renfort.

Pour permettre l'enroulement du tube sur une bobine, US 4 364 692 propose d'enrouler une tige autour du tube, de manière serrée, de façon à former un certain nombre de spires qui peuvent être soudées par leurs extrémités à la tige elle-même et/ou au tube.

Suivant une autre forme de réalisation, les spires peuvent être individuelles en soudant les deux extrémités et en les espaçant régulièrement sur la partie du tube à renforcer. Tant que le tube est simple, l'accroissement du diamètre dans les parties renforcées peut être acceptable. Mais, lorsque le tube est du type à double enveloppe ("pipe in pipe" en anglais) c'est-à-dire comprenant un tube externe ("carrier pipe" en anglais) qui est enfilé sur le tube interne, l'accroissement du diamètre du tube externe est inacceptable pour le transport et le stockage de grandes longueurs de tubes à double enveloppe.

Lorsque le tube rigide à poser est fabriqué en grande longueur à terre puis enroulé sur une bobine sur le navire de pose, les solutions préconisées dans les documents cités ci-dessus ne sont pas appropriées car elles utilisent soit des bagues de renfort de grande longueur, de l'ordre de 1 à 2,5 m, comme dans US 3 768 209, soit un enroulement d'une tige de renfort autour du tube rigide comme dans US 4 364 692.

Un autre limiteur de propagation est décrit dans US 3 860 039 et il consiste à placer un manchon au-dessus d'un tube rigide de manière à présenter un diamètre extérieur constant avec un revêtement. L'annulaire entre le manchon et le tube est rempli de goudron qui transfère l'effort d'écrasement au manchon.

D'autres systèmes de bouchage d'extrémité ("bulkheads" en anglais) de tube rigide à double paroi existent et sont décrits notamment dans WO 96/36831 et WO 98/17940. De tels bouchons d'extrémité ne sont pas assimilables à des limiteurs de propagation car la matière dans laquelle ils sont réalisés n'est pas apte à transférer les contraintes appliquées au tube externe sur le tube interne.

Le document DE 196 04 147 concerne une conduite de chauffage urbain enterrée dont les fuites de vapeur au niveau des soudures du tube d'acier central sont contenues dans une zone annulaire limitée par deux joints d'étanchéité et remplie comme le reste de la conduite par de la mousse.

Le document FR 2 015 293 enseigne de disposer dans l'espace annulaire d'une conduite à double enveloppe une résine.

Le document US 4 176 691 enseigne de limiter la fissuration par cisaillement d'une conduite simple en cerclant une zone donnée par un manchon rempli de mortier.

La présente invention a pour but de proposer un procédé pour réaliser un limiteur de propagation d'une déformation d'une conduite ou tube à double paroi et enroulable sur une bobine (reel en anglais) disposée sur un navire de pose ou système équivalent tel qu'une barge, plate-forme flottante, etc...

La présente invention a pour objet un procédé pour réaliser un limiteur de propagation d'une déformation dans un tube rigide tel que défini dans la revendication 1.

Un avantage de la présente invention réside dans le fait que le composé durcissable peut être introduit dans l'espace annulaire du tube rigide à terre et durci car la longueur de chaque zone prédéterminée qui est remplie par le composé durci est suffisamment courte pour permettre l'enroulement du tube rigide sur une bobine par exemple. La dimension de longueur est considérée comme axiale, c'est-à-dire dans la direction longitudinale du tube rigide, par opposition aux dimensions radiales, comme l'écartement entre la paroi externe de l'enveloppe interne et la paroi interne de l'enveloppe externe, ledit écartement définissant l'espace annulaire ménagé entre lesdites enveloppes interne et externe.

En fonction de la nature du composé durcissable utilisé, monocomposant ou bi-composant, le temps de durcissement peut être long ou court suivant les besoins. Il est possible de sélectionner une résine et un durcisseur qui soient tels que le durcissement du composé durcissable est terminé dans une zone prédéterminée avant l'introduction du même composé dans une autre zone prédéterminée.

Un autre avantage est que le limiteur de propagation d'une déformation est très simple à réaliser et ne nécessite pas des moyens importants et que les composés durcissables susceptibles d'être utilisés sont suffisamment nombreux pour procéder au meilleur choix qui dépend notamment de la durée de durcissement souhaitée.

Un autre avantage est que le nombre de zones déterminées remplies de composé durcissable peut être relativement grand sans créer aucune gêne à l'enroulement du tube rigide sur la ou les bobines réceptrices.

Un autre avantage est que le composé durcissable constitue par sa nature, une bonne isolation thermique au niveau des zones prédéterminées.

Selon une autre caractéristique de l'invention, les butées d'étanchéité sont constituées chacune par un matériau déformable radialement qui peut être constitué, dans un mode de réalisation par un ensemble d'éléments déformables individuellement dans le sens radial, chaque élément pouvant, par exemple, présenter la forme d'une rondelle ou d'un chevron.

Un autre avantage est que la déformation au moins radiale de chaque butée d'étanchéité permet de s'adapter aux diverses irrégularités locales de la paroi interne de l'enveloppe extérieure et donc aux tolérances de fabrication de l'enveloppe extérieure.

Selon une autre caractéristique de l'invention, les butées d'étanchéité sont en appui par une de leurs faces latérales sur une plaque d'appui qui est, par exemple, soudée sur la paroi externe de l'enveloppe interne, un intervalle étant ménagé entre le bord libre de la plaque d'appui et la paroi interne de l'enveloppe extérieure. De ce fait, après mise en place des butées d'étanchéité, introduction du composé durcissable entre deux plaques d'appui consécutives qui délimitent ainsi une zone prédéterminée remplie par le composé durcissable, puis déformation radiale des butées d'étanchéité, on réalise également une étanchéité à l'eau ou autre liquide si celle-ci ou celui-ci venait à s'introduire dans l'espace annulaire. En effet, le composé durcissable après durcissement remplit ledit intervalle en s'appuyant sur les butées expansées.

Un autre avantage réside dans le fait que le composé durcissable peut être injecté dans le tube rigide soit à terre lorsque la durée de vie en pot ("pot life" en anglais) est suffisamment longue pour que le durcissement ne se produise pas avant utilisation sur le site d'exploitation, soit directement sur le bateau de pose, des moyens d'activation étant prévus sur le navire de pose pour permettre le durcissement total ou partiel du composé durcissable.

D'autres avantages et caractéristiques apparaîtront plus clairement à la lecture de la description de plusieurs modes de réalisation de l'invention, ainsi que des dessins annexés sur lesquels :
- la figure 1 est une vue en coupe d'une partie d'un tronçon d'un tube rigide à double enveloppe ;
- la figure 2 est une vue schématique de l'assemblage de tronçons du tube rigide avec deux soudures ;
- la figure 3 est une autre vue schématique de l'assemblage de tronçons du tube rigide avec quatre soudures ;
- la figure 4 est une vue en perspective d'une partie des moyens d'équipement d'un navire de pose, utilisés dans une mise en oeuvre particulière de la méthode selon l'invention.

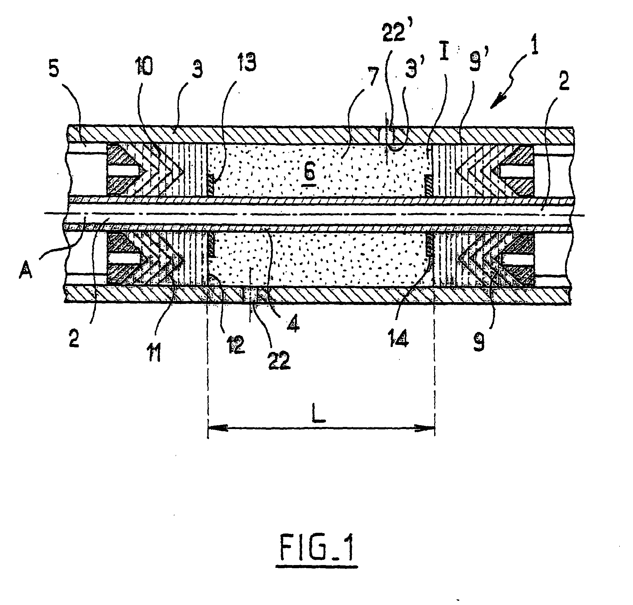

Le tube rigide à double enveloppe 1 d'axe longitudinal A, représenté partiellement sur la figure 1, comprend une enveloppe intérieure ("flow pipe" en anglais) ou tube intérieur 2 dont le diamètre et la nature du matériau sont choisis en fonction du fluide circulant dans ledit tube intérieur, notamment en fonction de la température et de la pression dudit fluide, et une enveloppe extérieure ou tube extérieur 3 ("carrier pipe" en anglais) qui est enfilé sur le tube intérieur 2. Le tube extérieur 3 présente généralement un diamètre extérieur D qui est surdimensionné par rapport au tube intérieur 2 pour permettre la mise en place d'un isolant thermique dans l'espace annulaire 5 et représente une épaisseur qui permet de résister à la pression hydrostatique qui s'exerce sur ledit tube extérieur 3. Le tube rigide 1 comprend généralement des entretoises ou écarteurs, non représentés, ("spacers" en anglais) qui sont solidaires de la paroi externe 4 du tube intérieur 2 et qui sont logés dans l'espace annulaire 5 ménagé entre les tubes extérieur 3 et intérieur 2.

Selon l'invention, un composé durcissable 6 est disposé dans des zones prédéterminées 7 du tube rigide 1. Chaque zone prédéterminée 7 présente une longueur axiale donnée L, qui est par exemple délimitée par deux butées d'étanchéité 9 qui sont chacune en contact étanche et serré par leurs faces radialement opposées 9', 9" sur les parois interne 3' et externe 4 des tubes 3 et 2 respectivement. La longueur axiale L de chaque zone prédéterminée 7, entre deux butées d'étanchéité consécutives, est au moins égale à 0,5 fois le diamètre extérieur D du tube extérieur 3 et elle est de préférence comprise entre 0,5 et deux fois ledit diamètre D, lorsque le composé est durci à terre et avant enroulement sur une bobine du navire de pose. Les calculs et les essais effectués avec divers types de composés durcissables 6 ont montré qu'une longueur L comprise dans les limites indiquées précédemment donnait satisfaction ; de préférence, la limite supérieure est égale à une fois le diamètre D. En fait, la longueur L dépend également et notamment des conditions d'utilisation du tube rigide 1. Il est évident que lorsque le tube rigide est de très grande longueur, les zones prédéterminées 7 seront nombreuses. De même, lorsque les conditions d'utilisation sont telles que la profondeur de la mer entre le navire de pose et le fond marin est importante, il y aura lieu de définir le nombre et la longueur des zones prédéterminées 7, de manière à éviter une propagation d'une déformation, si elle se produisait, même après la pose définitive d'une partie du tube rigide sur le fond marin.

Dans un mode préféré de l'invention, chaque butée d'étanchéité 9 est réalisée dans un ou plusieurs matériaux déformables radialement ainsi que cela est précisé ci-après. Des butées d'étanchéité déformables radialement 9 présentent plusieurs avantages. Un premier avantage est qu'elles ont chacune une dimension radiale, entre les faces opposées 9' et 9", qui est inférieure au diamètre intérieur d du tube extérieur 3, de sorte qu'après déformation, les faces radialement opposées 9' et 9" sont en contact étanche et serré sur la paroi interne 3' et la paroi externe 4. De plus, la mise en contact serrée sur la paroi interne 3' permet d'absorber les éventuelles irrégularités de surface que pourrait présenter ladite paroi interne 3' et dues notamment aux tolérances de fabrication du tube extérieur 3.

Chaque butée 9 peut être constituée par un ensemble d'éléments 10 déformables individuellement qui sont disposés sous la forme d'un empilement dans la direction axiale A, ou imbriqués les uns dans les autres, comme par exemple lorsque chaque élément 10 est sous la forme d'un chevron 11, la pointe des chevrons étant dirigée dans la direction A.

Dans un autre mode de réalisation, représenté également sur la figure 1, chaque butée 9 est en appui, par une de ses faces latérales 12, sur une plaque d'appui 13 dont la dimension radiale ou rayon compté à partir de l'axe longitudinal A est inférieur au rayon interne du tube extérieur 3, de sorte qu'un intervalle I est ménagé entre le bord libre 14 de la plaque d'appui 13 et la paroi interne 3' du tube extérieur 3, la face radiale interne de chaque plaque d'appui 13 étant soudée sur la paroi externe 4 du tube intérieur 2.

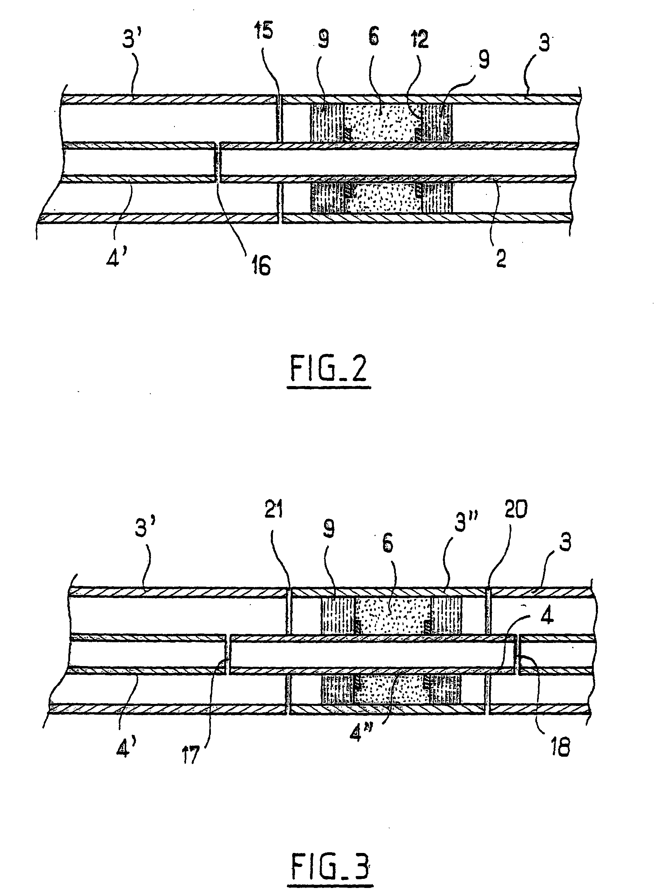

Suivant une première mise en oeuvre du procédé selon l'invention représentée sur la figure 2, on prend un tronçon de tube intérieur 2 et on dispose la butée d'étanchéité la plus à droite et, si nécessaire, les plaques d'appui 13 ainsi que les divers éléments qui doivent être logés dans l'annulaire 5 tels que les écarteurs, l'isolation thermique, etc... Ensuite, on enfile un tronçon de tube extérieur 3 sur le tube intérieur 2 de manière que la zone du tube intérieur où se trouvent les butées d'étanchéité soit recouverte en dernier, le tronçon de tube extérieur étant enfilé dans le sens opposé de façon à ne pas détériorer les butées d'étanchéité.

Dans une autre étape, les tubes internes de deux tronçons de conduite à double paroi sont soudés, puis on fait glisser le tronçon de tube extérieur jusqu'au contact avec l'autre tronçon de tube extérieur et on soude les deux tronçons. Les soudures des tubes intérieurs et extérieurs sont matérialisées par les références 16 et 15 respectivement ; on met en oeuvre ainsi un procédé à deux soudures.

Dans une autre étape, on déforme radialement la butée interne ou la plus à droite sur la figure 1 et on positionne l'autre butée d'étanchéité 9 la plus à gauche ; puis on introduit ou on injecte le composé durcissable en quantité suffisante dans la zone prédéterminée 7 et on déforme radialement la butée d'étanchéité la plus à gauche.

La figure 3 représente un procédé à quatre soudures. Après avoir pris un tronçon de tube interne 2 et soudé deux plaques d'appui 13, séparées par une distance donnée, on enfile un tronçon de tube extérieur 3 plus court que le tronçon de tube interne. Par une extrémité du tronçon de tube extérieur court, on introduit une butée expansible 9 qu'on met ensuite en pression axiale pour réaliser une déformation radiale et donc un contact serré sur la paroi interne du tronçon de tube court. On introduit ensuite la quantité désirée de composé durcissable, puis on introduit la deuxième butée 9 par l'autre extrémité du tronçon de tube court, et on déforme radialement ladite deuxième butée. Les étapes de soudure vont consister à souder le tronçon de tube interne avec deux autres tronçons, les deux soudures étant matérialisées par les zones ou intervalles 18 et 19, puis à souder le tronçon court de tube extérieur avec deux autres tronçons plus longs de tube extérieur, les deux soudures étant matérialisées par les références 20, 21.

Dans certains cas, le composé durcissable peut comprendre de l'air, ce qui est non souhaitable en raison de la fragilisation du dispositif de limitation de déformation 1 qu'il peut induire. Il est possible de chasser l'air du composé durcissable si on n'utilise pas de plaques d'appui et si on comprime le composé durcissable à l'aide des butées 9, l'air chassé pendant la compression étant évacué par l'interstice ou évent qui existe entre la face supérieure d'au moins une butée et la paroi interne du tube extérieur, alors que lesdites butées sont à l'état de repos non déformées. Après déformation, on obtient une étanchéité totale même à l'eau ou à un autre liquide qui s'introduirait dans l'espace annulaire.

Une autre mise en oeuvre du procédé selon l'invention consiste à ménager, au droit de chaque zone prédéterminée 7, au moins un orifice 22 à travers lequel le composé durcissable 6 est injecté sous pression dans la zone prédéterminée 7. Après remplissage de cette dernière, on obture le ou les orifices 22 de manière étanche. Dans ces conditions, le composé durcissable 6, qui est exempt d'air, s'introduit dans les intervalles I ménagés entre le bord libre 14 des plaques d'appui 13 et la paroi interne 3' et vient en contact avec les butées d'étanchéité qui sont à l'état non déformé. Après durcissement du composé durcissable, on obtient également une excellente étanchéité à tout corps étranger, solide ou fluide, qui circulerait dans l'espace annulaire 5. De préférence, deux orifices 22 et 22' sont ménagés dans chaque zone prédéterminée 7, l'orifice 22 étant ménagé en partie inférieure et l'orifice 22' en partie supérieure. Le composé durcissable est injecté sous pression dans la zone prédéterminée 7 jusqu'à ce qu'une petite partie déborde par l'orifice opposé radialement 22'. Ensuite, on obture les orifices 22 et 22' après le remplissage complet de la zone prédéterminée 7.

Bien qu'il soit possible d'utiliser comme composé durcissable un monocomposant dont la durée de vie en pot est relativement longue, il est préférable d'utiliser un composé bi-composant dont la résine et le durcisseur sont mélangés dans une tête de remplissage avant son introduction dans les zones prédéterminées 7 et dont la durée de vie en pot, à température ambiante, est de quelques minutes. Parmi les monocomposants, on peut citer le MS 703-25 de Engineering Materials Systems Inc. Parmi les composés bi-composants utilisables, on peut citer à titre d'exemple l'ARALDITE 2012 (AW 2104/HW 2934) commercialisé par la société CIBA GEIGY. La durée du durcissement peut être ajustée en agissant sur la température d'injection du mélange dans chaque zone prédéterminée 7.

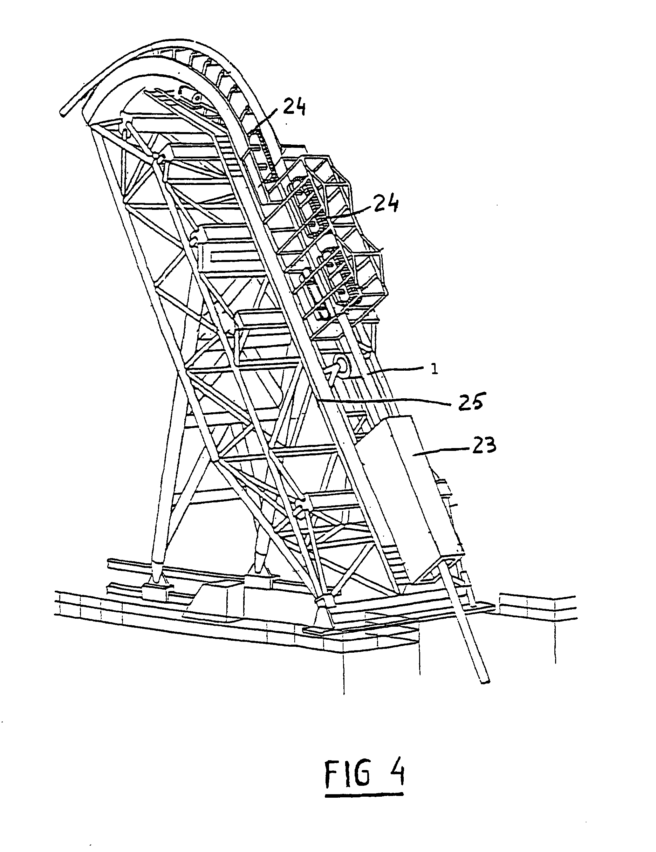

Dans un autre mode de réalisation, le tube rigide 1 est transporté enroulé sur le site d'utilisation avec les zones déterminées 7 vides ou dépourvues de tout composé durcissable. Sur le site d'utilisation, on procède au remplissage des zones déterminées 7 du tube rigide par un monocomposant à durée de vie en pot courte, de l'ordre de quelques minutes à quelques heures et pour accélérer le durcissement, on peut utiliser des moyens de chauffage comme cela est représenté sur la figure 4. Le remplissage des zones déterminées 7 peut être effectué soit après le déroulement du tube rigide 1 de la bobine réceptrice mais avant son passage dans des redresseurs 24 qui sont prévus sur le trajet du tube rigide, lorsque le temps de réaction des composants du composé est suffisamment long, soit après lesdits redresseurs 24. Lorsque les deux composants du composé réagissent entre eux rapidement pour permettre le durcissement du composé, il n'est pas nécessaire d'utiliser des moyens supplémentaires pour obtenir le durcissement recherché sauf si on souhaite accélérer le durcissement. Lorsqu'il est nécessaire ou souhaitable d'accélérer le durcissement afin de réduire les temps d'arrêt de pose du tube rigide, des moyens de chauffage 23 peuvent être prévus sur le trajet de déplacement du tube rigide entre les redresseurs et les moyens de chauffage 23 de sorte que le durcissement a été effectué au moins partiellement avant que le tube rigide ne quitte le navire de pose. Dans un mode de réalisation préféré de l'invention, les moyens de chauffage 23 sont prévus à proximité de l'extrémité inférieure d'une rampe de pose 25 montée sur le navire de pose et les zones déterminées 7 sont remplies après leur passage dans les redresseurs 24 alors que le tube rigide est rectiligne. Le bi-composant utilisé qui est thermodurcissable peut être constitué par ARALDITE AY 105-1/HY 991 commercialisé par la société CIBA GEIGY.

Un composé ne nécessitant pas de moyens de chauffage peut être constitué par :
ARALDITE 2012 (AW 2104/HW2934) commercialisé par la société CIBA GEIGY.

Avantageusement, si le composé durcissable n'est pas suffisamment rigide, à l'état durci, il est possible d'insérer, au moment de la fabrication du tube rigide 1, un renfort dans une ou plusieurs des zones 7. Le renfort peut être constitué par des fibres, tissus ou mats, un ressort disposé autour du tube intérieur 2, un treillis métallique etc... De la sorte, la ou les zones 7 seront remplies par un composite constitué par le renfort et le composé durcissable.

Il est également possible d'utiliser un composé durcissable monocomposant dont la durée de vie en pot est relativement importante, par exemple de l'ordre de quelques semaines. Un tel composé durcissable peut être injecté dans les zones déterminées 7 au moment de la fabrication du tube rigide à terre 1, ce dernier étant ensuite transporté jusqu'au navire de pose où il est enroulé sur une ou plusieurs bobines réceptrices. Comme le composé durcissable est dans l'état non réticulé, il présente une souplesse qui permet l'enroulement du tube rigide sur la ou les bobines réceptrices jusqu'à ce que le navire de pose parvienne sur le site d'utilisation.

Il est nécessaire alors de réaliser le durcissement du composé avant l'immersion du tube rigide dans l'eau. Dans ce cas, dans une étape de pose, après déroulement du tube rigide de la bobine sur laquelle il a été enroulé, le tube rigide 1 passe devant ou dans des moyens appropriés pour activer et durcir le composé injecté dans chaque zone déterminée 7. Les moyens appropriés peuvent être constitués, par exemple, par des moyens de chauffage adéquats et bien connus, qui initient la réticulation ou le durcissement du monocomposant. Le durcissement du monocomposant est effectué dans un endroit où le tube rigide est linéaire et le moment où le tube rigide quitte le navire de pose pour être immergé dans l'eau.

## Revendications

1. Procédé pour réaliser un limiteur de propagation longitudinale d'une déformation dans un tube rigide à double paroi enroulable (1) de transport de fluides sur fond marin, le tube comprenant une enveloppe extérieure (3) présentant un diamètre externe (D) déterminé et disposée autour d'une enveloppe intérieure (2), un espace annulaire (5) étant ménagé entre lesdites enveloppes extérieure (3) et intérieure (2), des zones prédéterminées (7) étant ménagées dans ledit espace annulaire (5), chaque zone prédéterminée (7) étant délimitée entre deux butées d'étanchéité (9) dont les faces radialement opposées sont en contact avec les tubes extérieur (3) et intérieur (2), **caractérisé en ce qu'**il consiste à introduire un composé durcissable (6) dans chaque zone prédéterminée (7), avant enroulement ou après déroulement dudit tube rigide sur une bobine et à durcir ledit composé durcissable après son introduction dans lesdites zones prédéterminées, la longueur (L) de chaque zone prédéterminée (7) étant au moins égale à 0,5 fois le diamètre externe (D) de l'enveloppe extérieure (3) et étant suffisamment courte pour permettre l'enroulement du tube rigide sur une bobine.

2. Procédé selon la revendication 1, **caractérisé en ce que** la longueur (L) de chaque zone prédéterminée (7) est comprise entre 0,5 et 2 fois le diamètre externe (D) de l'enveloppe extérieure (3).

3. Procédé selon la revendication 1, **caractérisé en ce que** les butées d'étanchéité (9) sont constituées chacune par un matériau déformable radialement.

4. Procédé selon la revendication 3, **caractérisé en ce que** chaque butée d'étanchéité (9) est en appui par au moins un côté latéral sur une plaque d'appui rigide (13).

5. Procédé selon la revendication 4, **caractérisé en ce que** la plaque d'appui (13) présente une dimension radiale inférieure à la dimension radiale de l'espace annulaire (5).

6. Procédé selon la revendication 5, **caractérisé en ce que** la plaque d'appui (13) est métallique et rendue solidaire de la paroi extérieure (4) de l'enveloppe intérieure (2), de manière à ménager un intervalle (I) entre le bord libre (14) de ladite plaque d'appui (13) et la paroi intérieure (3') de l'enveloppe extérieure (3).

7. Procédé selon l'une des revendications 1 à 4, **caractérisé en ce que** chaque butée d'étanchéité (9) en matériau déformable radialement présente une dimension radiale inférieure à l'espace annulaire (5) lorsqu'elle est introduite dans ledit tube rigide, puis elle est soumise à une expansion radiale pour amener les faces radialement opposées en contact serré avec les parois en regard des enveloppes extérieure et intérieure.

8. Procédé selon la revendication 1, **caractérisé en ce que** le composé durcissable (6) est une résine époxy.

9. Procédé selon l'une des revendications 1, 2, ou 8, **caractérisé en ce que** le composé durcissable (6) est injecté dans chaque zone prédéterminée à travers au moins un orifice (22) ménagé dans l'enveloppe extérieure (3).

10. Procédé selon la revendication 9, **caractérisé en ce que** le composé (6) est thermodurcissable.

11. Procédé selon la revendication 9, **caractérisé en ce que** le composé (6) est durcissable à la température ambiante.

12. Procédé selon la revendication 10, **caractérisé en ce que** le composé thermodurcissable (6) est introduit dans les zones prédéterminées (7) après déroulement du tube rigide d'une bobine sur laquelle il avait été préalablement enroulé et **en ce que** chaque zone prédéterminée (7) passe dans des moyens de chauffage (23) pour accélérer le durcissement du composé thermodurcissable.

13. Procédé selon la revendication 12, **caractérisé en ce que** les moyens de chauffage (23) sont montés après des redresseurs de conduite (24) prévus sur un navire de pose et entre lesquels se déplace le tube rigide.

14. Procédé selon la revendication 1, **caractérisé en ce que** la durée de vie en pot du composé durcissable est comprise entre quelques minutes à plusieurs semaines.

15. Procédé selon la revendication 1, **caractérisé en ce que** le composé durcissable est introduit dans les zones prédéterminées (7) à terre avant enroulement sur une bobine de réception située sur le navire de pose et le transport sur site.

16. Procédé selon la revendication 13, **caractérisé en ce que** le composé durcissable (6) est injecté dans les zones prédéterminées (7) après les redresseurs (24) du navire.

## Claims

1. Method of producing a device for arresting the propagation of a buckle in a rigid pipe (1) comprising an outer wall (3) having a defined external diameter (D) and placed around an inner wall (2), an annular space (5) being provided between the said outer (3) and inner (2) walls, predetermined regions (7) being provided in the said annular space (5), each predetermined region (7) being bounded between two sealing blocks (9) whose radially opposed faces are in contact with the outer (3) and inner (2) pipes, **characterized in that** it consists in introducing a curable compound (6) in each predetermined region (7), before winding or after unreeling of said pipe on/from a reel the length (L) of each predetermined region (7) being at least equal to 0.5 times the external diameter (D) of the outer wall (3).

2. Method according to Claim 1, **characterized in that** the length (L) of each predetermined region (7) ranges between 0.5 and 2 times the external diameter (D) of the outer wall (3).

3. Method according to Claim 1, **characterized in that** the sealing blocks (9) each consist of a radially deformable material.

4. Method according to Claim 3, **characterized in that** each sealing block (9) bears via at least one lateral side against a rigid bearing plate (13).

5. Method according to Claim 4, **characterized in that** the bearing plate (13) has a radial dimension less than the radial dimension of the annular space (5).

6. Method according to Claim 5, **characterized in that** the bearing plate (13) is made of metal and is fastened to the outer surface (4) of the inner wall (2), so as to leave a gap (I) between the free edge (14) of the said bearing plate (13) and the inner surface (3') of the outer wall (3).

7. Method according to one of Claims 1 to 4, **characterized in that** each sealing block (9) made of radially deformable material has a radial dimension less than the annular space (5) when it is introduced into the said rigid pipe and it then undergoes radial expansion in order to bring the radially opposed faces into tight contact with the facing surfaces of the outer and inner walls.

8. Method according to Claim 1, **characterized in that** the curable compound (6) is an epoxy resin.

9. Method according to one of Claims 1, 2 or 8, **characterized in that** the curable compound (6) is injected into each predetermined region through at least one orifice (22) provided in the outer wall (3).

10. Method according to Claim 9, **characterized in that** the compound (6) is a thermosetting compound.

11. Method according to Claim 9, **characterized in that** the compound (6) is curable at room temperature.

12. Method according to Claim 10, **characterized in that** the thermosetting compound (6) is introduced into the predetermined regions (7) after the rigid pipe has been unreeled from a reel onto which it had been previously wound and **in that** each predetermined region (7) passes through heating means (23) in order to accelerate the curing of the thermosetting compound.

13. Method according to Claim 12, **characterized in that** the heating means (23) are mounted after straighteners (24) provided on a pipelaying vessel and between which means and which straighteners the rigid pipe runs.

14. Method according to Claim 1, **characterized in that** the pot life of the curable compound ranges between a few minutes and a few weeks.

15. Method according to Claim 1, **characterized in that** the curable compound is introduced into the predetermined regions (7) on land, before winding onto a receiving reel located on the pipelaying vessel and before transportation to the site.

16. Method according to Claim 13, **characterized in that** the curable compound (6) is injected into the predetermined regions (7) after the straighteners (24).

## Patentansprüche

1. Verfahren zum Herstellen eines Begrenzers der longitudinalen Ausbreitung einer Verformung in einem wickelbaren doppelwandigen starren Rohr (1) für den Transport von Fluiden auf dem Meeresboden, wobei das Rohr eine Außenhülle (3) umfasst, die einen bestimmten Außendurchmesser (D) aufweist und um eine Innenhülle (2) angeordnet ist, wobei zwischen der Außenhülle (3) und der Innenhülle (2) ein ringförmiger Raum (5) ausgebildet ist, wobei in dem ringförmigen Raum (5) vorgegebene Zonen (7) ausgebildet sind, wovon jede zwischen zwei Dichtungsanschlägen (9) begrenzt ist, deren radial gegenüberliegende Flächen mit dem Außenrohr (3) bzw. mit dem Innenrohr (2) in Kontakt sind, **dadurch gekennzeichnet, dass** es darin besteht, in jede vorgegebene Zone (7) eine aushärtbare Zusammensetzung (6) einzuleiten, bevor oder nachdem das starre Rohr auf eine Haspel gewickelt wird bzw. gewickelt worden ist, und die aushärtbare Zusammensetzung nach ihrer Einleitung in die vorgegebenen Zonen auszuhärten, wobei die Länge (L) jeder vorgegebene Zone (7) wenigstens gleich dem 0,5fachen Außendurchmesser (D) der Außenhülle (3) und ausreichend kurz ist, um das Aufwickeln des starren Rohrs auf eine Haspel zu ermöglichen.

2. Verfahren nach Anspruch 1, **dadurch gekennzeichnet, dass** die Länge (L) jeder vorgegebenen Zone (7) im Bereich des 0,5- bis 2fachen Außendurchmessers (D) der Außenhülle (3) liegt.

3. Verfahren nach Anspruch 1, **dadurch gekennzeichnet, dass** die Dichtungsanschläge (9) jeweils aus einem radial verformbaren Material gebildet sind.

4. Verfahren nach Anspruch 3, **dadurch gekennzeichnet, dass** sich jeder Dichtungsanschlag (9) mit wenigstens einer Seite an einer starren Abstützplatte (13) abstützt.

5. Verfahren nach Anspruch 4, **dadurch gekennzeichnet, dass** die Abstützplatte (13) eine radiale Abmessung besitzt, die kleiner als die radiale Abmessung des ringförmigen Raums (5) ist.

6. Verfahren nach Anspruch 5, **dadurch gekennzeichnet, dass** die Abstützplatte (13) aus Metall besteht und mit der Außenwand (4) der Innenhülle (2) einteilig ausgebildet ist, so dass zwischen der freien Kante (14) der Abstützplatte (13) und der Innenwand (3') der Außenhülle (3) ein Zwischenraum (I) geschaffen wird.

7. Verfahren nach einem der Ansprüche 1 bis 4, **dadurch gekennzeichnet, dass** jeder Dichtungsanschlag (9) aus einem radial verformbaren Material eine radiale Abmessung besitzt, die kleiner als der ringförmige Raum (5) ist, wenn er in das starre Rohr eingeführt wird, woraufhin er einer radialen Ausdehnung unterworfen wird, um die einander gegenüberliegenden radialen Flächen in einen Klemmkontakt mit den Wänden gegenüber der Außenhülle und der Innenhülle zu bringen.

8. Verfahren nach Anspruch 1, **dadurch gekennzeichnet, dass** die aushärtbare Zusammensetzung (6) ein Epoxidharz ist.

9. Verfahren nach einem der Ansprüche 1, 2 oder 8, **dadurch gekennzeichnet, dass** die aushärtbare Zusammensetzung (6) in jede vorgegebene Zone über wenigstens eine Öffnung (22) eingespritzt wird, die in der Außenhülle (3) ausgebildet ist.

10. Verfahren nach Anspruch 9, **dadurch gekennzeichnet, dass** die Zusammensetzung (6) wärmeaushärtbar ist.

11. Verfahren nach Anspruch 9, **dadurch gekennzeichnet, dass** die Zusammensetzung (6) bei Umgebungstemperatur aushärtbar ist.

12. Verfahren nach Anspruch 10, **dadurch gekennzeichnet, dass** die wärmeaushärtbare Zusammensetzung (6) nach der Abwicklung des starren Rohrs von einer Haspel, auf die es vorher aufgewickelt worden war, in die vorgegebenen Zonen (7) eingeleitet wird und dass sich jede vorgegebene Zone (7) durch Heizmittel (23) bewegt, um die Aushärtung der wärmeaushärtbaren Zusammensetzung zu beschleunigen.

13. Verfahren nach Anspruch 12, **dadurch gekennzeichnet, dass** die Heizmittel (23) hinter Leitungsausrichtern (24) angebracht sind, die auf einem Ausbringungsschiff vorgesehen sind und zwischen denen sich das starre Rohr verschiebt.

14. Verfahren nach Anspruch 1, **dadurch gekennzeichnet, dass** die Lebensdauer der aushärtbaren Zusammensetzung im Topf im Bereich von einigen Minuten bis zu mehreren Wochen liegt.

15. Verfahren nach Anspruch 1, **dadurch gekennzeichnet, dass** die aushärtbare Zusammensetzung in die vorgegebenen Zonen (7) auf dem Festland vor dem Aufwickeln auf eine auf dem Ausbringungsschiff befindliche Aufnahmehaspel und vor dem Transport an den Einsatzort eingeleitet wird.

16. Verfahren nach Anspruch 13, **dadurch gekennzeichnet, dass** die aushärtbare Zusammensetzung (6) in die vorgegebenen Zonen (7) hinter den Ausrichtern (24) des Schiffs eingeleitet wird.
